# FASCICULE DE BREVET EUROPEEN

(11) **EP 3 139 726 B1**
(45) Date de publication et mention de la délivrance du brevet: **11.09.2019**
(21) Numéro de dépôt: 15728049.6
(22) Date de dépôt: 04.05.2015
(51) Int. Cl.: A01D 75/20

(54) **MACHINE AGRICOLE COMPORTANT UN DISPOSITIF PERFECTIONNE DE COMMANDE D'UN PROTECTEUR**
LANDWIRTSCHAFTLICHE MASCHINE MIT EINER VERBESSERTEN SCHUTZVORRICHTUNGSSTEUERUNG
AGRICULTURAL MACHINE COMPRISING AN IMPROVED PROTECTOR CONTROL

(30) Priorité: 06.05.2014 FR 1454086
(43) Date de publication de la demande: 15.03.2017
(73) Titulaire: Kuhn SA (Societe Anonyme), 67700 Saverne (FR)
(72) Inventeur: HALTER, Cédric, F-67310 Wasselonne (FR)
(74) Mandataire: Nuss, Laurent
(86) Numéro de dépôt international: PCT/FR2015/051182
(87) Numéro de publication internationale: WO 2015/170045

(56) Documents cités:
- EP-A1- 1 369 025
- DE-U1-202011 101 223
- FR-A1- 2 687 891
- FR-A1- 2 726 152

## Description

La présente invention concerne le domaine des machines agricoles, notamment les machines agricoles avec au moins un outil de travail entraîné par un moyen moteur, tel qu'une prise de force d'un tracteur, et avec un dispositif de protection comprenant au moins un protecteur mobile entre des positions opérationnelle et non-opérationnelle.

Dans ce contexte, l'invention concerne plus particulièrement une machine agricole comportant un dispositif perfectionné de commande d'au moins un moyen protecteur.

La protection des outils et mécanismes des machines, et surtout la protection des utilisateurs et du public, sont une préoccupation majeure dans le domaine du machinisme agricole en général, et des machines agricoles à outils mobiles tournants et/ou tranchants en particulier.

Les dispositifs de protection mis en oeuvre doivent, bien entendu, être fiables, résistants et réaliser un confinement suffisant des outils, mais également autoriser un accès aisé aux outils quand cela est nécessaire (nettoyage, maintenance, réparation) ou, plus généralement, permettre le déplacement d'au moins certaines composantes desdits dispositifs de protection entre au moins deux positions ou configurations (opérationnelle / non-opérationnelle ; de travail / de transport).

La demanderesse notamment a déjà proposé plusieurs solutions dans ce cadre, telles que par exemple :
- Par le document FR 2 621 213, une machine de fenaison dans laquelle des parties latérales de la machine peuvent être relevées par des vérins, ce relèvement entraînant un relèvement automatique de leurs moyens de protection associés par l'intermédiaire d'un système de tringles. Les moyens de protection définissent à l'état relevé un volume de protection confiné autour des outils.
- Par le document FR 2 687 891, une faucheuse avec un organe de protection en deux parties, dans laquelle les deux parties de protection sont automatiquement déplacées de leur position de travail vers leur position de transport lors du relevage de l'organe de coupe, par l'intermédiaire d'éléments de manoeuvre du type câble + ressort. Le maintien des parties de l'organe de protection en position relevée est de nature élastique.
- Par le document FR 2 678 804, une machine de fenaison avec un dispositif de protection de la zone râteleuse et un déflecteur latéral réglable, dans laquelle le vérin de réglage du déflecteur sert aussi à relever les deux parties constitutives du dispositif de protection. Un mécanisme séparé de verrouillage en position relevée des deux parties de protection est également prévu.
- Par le document FR 2 726 152, une machine agricole pour la coupe des végétaux avec un dispositif de protection présentant une partie avant mobile qui ne peut être relevée manuellement tant que le mécanisme de coupe se trouve en position de travail. En outre, ladite partie avant est verrouillée en position relevée par un crochet et peut retourner en position abaissée sous son propre poids ou de manière assistée.
- Par le document FR 2 704 385, une machine agricole du type andaineuse de fourrage avec un dispositif de protection avec deux parties latérales repliables manuellement. Un verrou mécanique de blocage en rotation de la roue de l'andaineuse est prévu, ce verrou empêchant également un repliement en (position découverte) des parties latérales du dispositif de sécurité aussi longtemps que l'outil tourne.

Néanmoins, ces systèmes connus présentent tous un mécanisme ou un dispositif de verrouillage spécifique, séparé et généralement à manoeuvrer manuellement.

Plus globalement, ces systèmes connus ne prévoient pas de moyen intégré de verrouillage en position du dispositif de protection, compatible avec un déplacement ou une transposition manuel(le) ou actionné(e) du ou des outil(s) et prenant en compte l'ensemble des paramètres de sécurité liés à cet ou ces outil(s).

Par ailleurs, par le document EP-A-1 369 025, on connaît une machine agricole motorisée autonome (c'est-à-dire fonctionnant sans conducteur) comprenant un outil de coupe auquel est associé un capot de protection mobile, ce capot pouvant être déplacé entre une position de protection active dans laquelle il recouvre l'outil et une position inactive dans laquelle il libère ou découvre l'outil.

Ladite machine comprend également un capteur de déplacement, faisant partie d'un système de détermination de positionnement global (géolocalisation de la machine), et fournissant un signal de commande de la position du capot de protection, ce dernier étant en position inactive lorsque la machine se déplace et en position active lorsque la machine est immobile.

Ainsi, le document EP-A-1 369 025 divulgue, spécifiquement dans un contexte de machine agricole autonome, une machine présentant sensiblement l'ensemble des caractéristiques du préambule de la revendication 1.

Toutefois, dans ce document, ni l'actionnement de l'outil en lui-même, ni sa position, n'est pris en compte pour la détermination de la position du capot de protection. De plus, aucun dispositif spécifique de verrouillage du capot n'est prévu.

La présente invention a pour but de pallier au moins les inconvénients majeurs et de surmonter au moins les limitations principales des différentes solutions évoquées ci-dessus,ce dans un contexte de machine attelée.

De plus, l'invention devrait permettre de maintenir automatiquement un verrouillage de sécurité et si possible ne pas nécessiter d'intervention humaine pour les différentes manipulations de la machine agricole. Enfin, les moyens utilisés devraient être limités.

A cet effet, l'invention a pour objet une machine agricole selon le préambule de la partie 1 et présentant également, les caractéristiques de la partie caractérisante de cette revendication.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

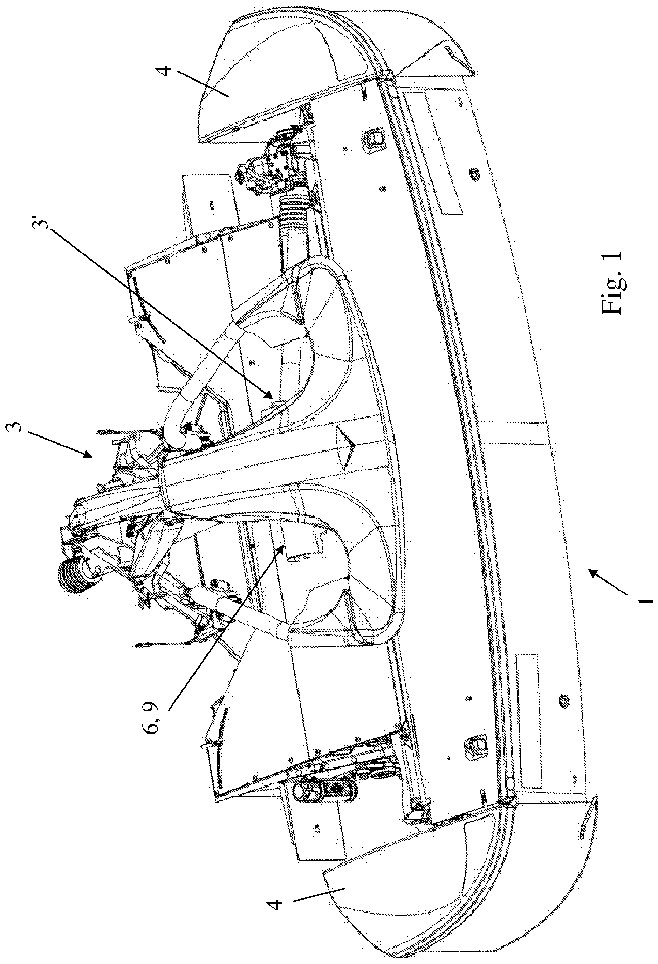

La figure 1 est une vue de devant en perspective d'une machine agricole selon l'invention, sous forme de faucheuse frontale ;

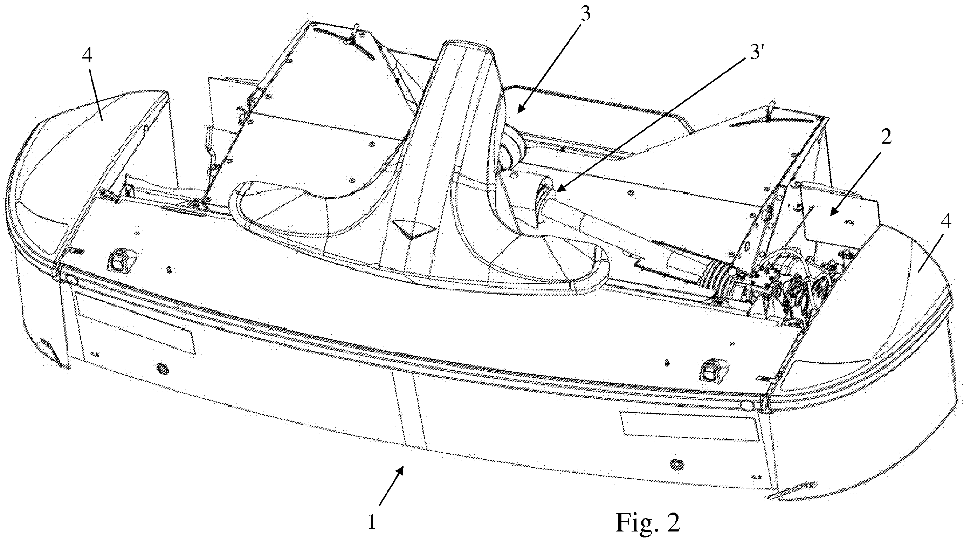

La figure 2 est une vue en perspective selon une direction différente et partiellement en transparence de la machine agricole représentée figure 1 ;
Les figures 3A et 3B sont des vues de détail, à une échelle différente, d'une partie du circuit de commande d'au moins un actionneur de réglage d'au moins un moyen protecteur mobile faisant partie de la machine agricole représentée sur les figures 1 et 2 et intégrant le dispositif de verrouillage, selon une première variante d'un mode de réalisation de l'invention, le dispositif de verrouillage étant respectivement configuré pour délivrer une première et une seconde valeur de commande ;
La figure 3C est une vue en coupe (selon un plan axial) du circuit de commande représenté figure 3A ;
La figure 4A est une vue en élévation et en coupe selon un plan axial, d'une partie d'un circuit de commande faisant partie d'une machine agricole selon une seconde variante d'un mode de réalisation de l'invention, similaire à celle ressortant de la figure 3C ;
La figure 4B est une vue partielle en perspective et par transparence de l'objet représenté figure 4A ;
Les figures 5 et 6 sont des vues partielles en perspective d'un mode de réalisation d'un dispositif de déplacement des deux moyens protecteurs faisant partie de la machine agricole représentée figures 1 et 2 et comprenant le circuit de commande des figures 3A et 3B, les moyens protecteurs étant respectivement en position opérationnelle (figure 5) et non-opérationnelle (figure 6) ;
La figure 7 est un schéma fluidique simplifié du dispositif de déplacement des figures 5 et 6 ;

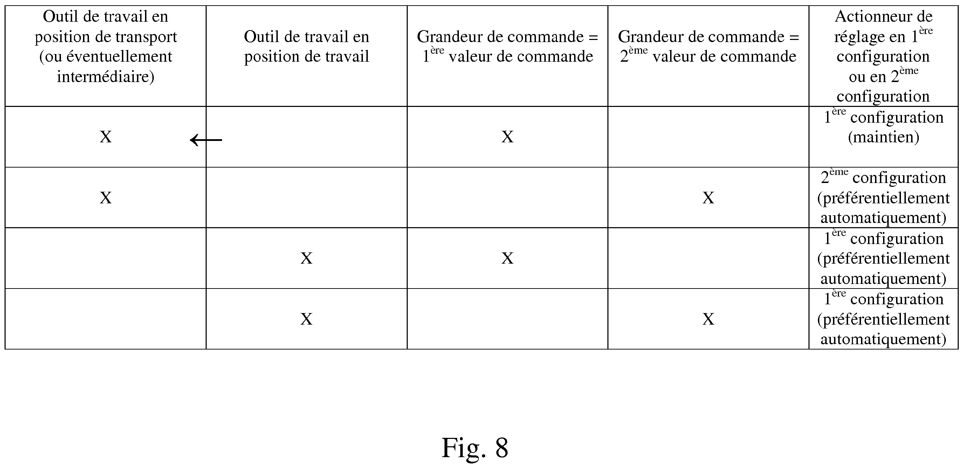

La figure 8 est un exemple de table de vérité indiquant la configuration de l'actionneur de réglage d'un protecteur faisant partie de la machine agricole selon l'invention, en fonction de la position de l'outil concerné et de la condition de vitesse d'entraînement ou de travail de l'outil, et,
La figure 9 est un schéma synoptique simplifié d'une variante électrique du dispositif de déplacement faisant partie de la machine agricole selon l'invention.

Les figures annexées montrent, partiellement ou en totalité, une machine agricole 1 **agencée pour** être reliée à et être entraînée par un tracteur et comprenant :
- au moins un outil de travail 2 pouvant être entraîné à partir d'un moyen d'entraînement 3 pouvant présenter une vitesse d'entraînement variable, résultant en une vitesse de travail variable pour l'outil 2 concerné, cet outil de travail 2 pouvant être déplacé ou transposé au moins entre une position ou configuration de travail et une position ou configuration de transport,
- au moins un moyen protecteur 4 mobile pouvant être déplacé au moins entre une position opérationnelle, dans laquelle il entoure et/ou recouvre au moins partiellement l'outil de travail 2 concerné, et une position non-opérationnelle, dans laquelle l'outil de travail 2 concerné est au moins partiellement accessible,
- un dispositif 5 de déplacement dudit au moins un moyen protecteur 4 permettant de déplacer ce dernier au moins entre les positions opérationnelle et non-opérationnelle précitées, ce dispositif de déplacement 5 comportant au moins un actionneur de réglage 7 alimenté par une énergie délivrée depuis une source d'énergie extérieure 8,
- un dispositif de verrouillage 6 du moyen protecteur 4, dans au moins une des positions de ce dernier.

Dans la présente, "vitesse d'entraînement" et "vitesse de travail" concernent des vitesses de mouvements propres aux moyens respectivement concernés, c'est-à-dire le moyen d'entraînement 3 et l'outil 2, et non pas la vitesse de déplacement de ces moyens résultant du déplacement de la machine agricole 1.

Généralement, et notamment lorsque la machine agricole 1 est une machine tractée ou portée par un tracteur ou analogue, la vitesse d'entraînement du moyen 3 est une vitesse de rotation, en particulier la vitesse de rotation résultant de la liaison du moyen 3 formant arbre d'entrée de la machine 1 avec la prise de force du tracteur ou analogue.

De même, lorsque l'outil de travail 2 est un outil rotatif, la vitesse de travail est une vitesse de rotation.

De plus, il est prévu :
que le dispositif de déplacement 5 comprenne un circuit 9 de commande de l' actionneur ou de chaque actionneur de réglage 7 permettant au moins une transposition de l'actionneur de réglage 7 concerné dans ou vers une première configuration, dans laquelle le moyen protecteur 4 concerné se trouve dans sa position opérationnelle, ainsi qu'une transposition de l'actionneur de réglage 7 concerné dans ou vers une deuxième configuration, dans laquelle le moyen protecteur 4 concerné peut se trouver dans sa position non-opérationnelle, et
que le circuit de commande 9 intègre le dispositif de verrouillage 6 du moyen protecteur 4 concerné et est tel qu'il autorise ou contraint l'actionneur de réglage 7 concerné à se trouver dans sa première configuration lorsque l'outil 2 de travail considéré se trouve dans sa position ou configuration de travail

Conformément à l'invention, **machine 1 est agencée pour** :
que le dispositif de verrouillage 6 transforme automatiquement une grandeur d'entrée variable en une grandeur de commande de l'actionneur de réglage 7 concerné, cette grandeur de commande pouvant prendre une première valeur de commande utilisée pour empêcher une transposition dudit actionneur de réglage 7 en dehors de sa première configuration,
que la grandeur d'entrée présente une valeur qui est fonction ou dépendante de la vitesse de travail dudit au moins un outil 2 concerné, et
que la grandeur de commande prenne et conserve la première valeur de commande tant que la grandeur d'entrée présente une valeur représentative de la vitesse de travail dudit au moins un outil 2 concerné supérieure à une vitesse seuil (respectivement d'entraînement ou de travail).

Ainsi, grâce aux dispositions inventives précitées, l'actionneur de réglage 7 qui est apte et destiné à déplacer au moins un moyen protecteur 4, est également utilisé pour bloquer en position ce moyen protecteur 4 (en position opérationnelle) lorsque certains critères ou certaines conditions de sécurité sont ou ne sont pas vérifié(e)s ou rempli(e)s, en particulier des critères ou des conditions concernant l'état (par exemple : position, mouvement) de l'outil de travail 2 concerné. Aucun composant ou élément de blocage ou de verrouillage séparé n'est donc requis.

Le dispositif de verrouillage 6 a, quant à lui, pour rôle de traduire des conditions de sécurité liées à l'entraînement ou au travail de l'outil 2 concerné en grandeur de commande de l'actionneur de réglage 7 visé, soit pour autoriser sa manoeuvre, soit pour le bloquer (dans une configuration de sécurisation de la machine 1), selon que lesdites conditions de sécurité sont vérifiées ou non.

Ces dernières ne concernent pas seulement la position ou la configuration de l'outil de travail 2 visé (moyen protecteur 4 obligatoirement en position opérationnelle lorsque l'outil 2 associé est en position de travail), mais également son état d'activation ou d'animation, et plus généralement la transmission ou l'absence de transmission d'énergie cinétique à l'outil 2 au moins présent, ou plus généralement à la machine agricole 1, par un moyen moteur embarqué ou par un moyen moteur externe, ce par l'intermédiaire d'un moyen d'entraînement 3, tel que par exemple un arbre d'entrée relié à une prise de force d'un tracteur, ou encore un arbre intermédiaire de transmission 3'.

L'homme du métier comprend que la machine agricole 1 visée dans la présente peut comprendre un ou plusieurs outils de travail 2 et un ou plusieurs moyens protecteurs mobiles 4. Un unique moyen protecteur 4 peut entourer ou recouvrir au moins partiellement un ou plusieurs outils 2 ou, en variante, plusieurs moyens protecteurs 4 peuvent entourer ou recouvrir au moins partiellement soit tous ensemble un unique outil de travail 2, soit chacun un ou plusieurs outils de travail 2 associé(s).

De même, le dispositif de déplacement 5 peut comprendre un ou plusieurs actionneur(s) de réglage 7, en fonction notamment du nombre de moyens protecteurs 4 présents, chaque actionneur de réglage 7 pouvant être associé à un ou plusieurs moyens protecteurs 4, par exemple par l'intermédiaire d'éléments de tringlerie adaptés, et être de type à simple effet ou à double effet (en étant solidaire ou non du bâti de la machine).

Bien que la description qui suive porte plus particulièrement, en relation avec les figures annexées, sur une réalisation de l'invention mettant en oeuvre un unique actionneur de réglage 7 en association avec un ou deux moyens protecteurs mobiles 4, toutes les variantes et combinaisons possibles mentionnées précédemment doivent également être considérées comme étant comprises dans le cadre du domaine de protection de l'invention.

De plus, le ou les moyen(s) protecteur(s) 4 visé(s) dans la présente peut/peuvent adopter différentes formes, structures, tailles et constitutions, en étant identiques ou différents entre eux, et correspondre à une partie seulement ou à la totalité d'un dispositif de protection.

De même, leur déplacement entre leurs différentes positions peut être de différents types : translation, rotation ou mouvement complexe résultant de la combinaison de différents mouvements élémentaires (effectués simultanément ou successivement).

En outre, les positions opérationnelle et non-opérationnelle du, d'au moins un ou des protecteur(s) 4 présent(s) sur la machine agricole 1 peuvent, en fonction de sa ou de leur constitution et/ou mise en oeuvre, non seulement correspondre à deux localisations ou positionnements différent(e)s de ce(s) protecteur(s) 4, mais également à deux états ou deux configurations différent(e)s de ce(s) dernier(s).

Ainsi, dans le cas d'un protecteur 4 partiellement ou totalement déformable, par exemple entre un état déployé et un état au moins partiellement replié (cas d'une toile fixée sur une structure rigide repliable ou montée coulissante sur un rail), les positions opérationnelle et non-opérationnelle peuvent correspondre à deux configurations d'extension différentes du ou de chaque protecteur 4 concerné, associé ou non à un déplacement de ce dernier.

En accord avec une première mesure additionnelle de sécurisation de la machine 1 prévue par l'invention, le circuit de commande 9 de l'actionneur de réglage 7 concerné est tel que, lorsque l'outil de travail 2 concerné est déplacé de sa position ou configuration de transport vers sa position ou configuration de travail, ledit actionneur de réglage 7 est automatiquement transposé vers sa première configuration.

En outre, et en relation avec une sécurisation supplémentaire de la machine 1 dépendant de l'actionnement ou de l'animation de cette dernière, le circuit de commande 9 peut être tel qu'à partir d'une configuration initiale de la machine 1, dans laquelle l'outil de travail 2 concerné est dans sa position de travail et dans laquelle la grandeur de commande prend la première valeur de commande, l'actionneur de réglage 7 demeure dans sa première configuration lors d'un déplacement ultérieur de l'outil de travail 2 vers sa position ou configuration de transport ou vers une position ou configuration intermédiaire située entre la position ou configuration de travail et la position ou configuration de transport tant que la grandeur de commande conserve ou continue de prendre la première valeur de commande.

Le déverrouillage autorisant un passage du ou de chaque protecteur 4 de sa position opérationnelle vers sa position non opérationnelle, ou précédant un tel passage induit automatiquement, nécessite ainsi la réalisation simultanée de deux conditions (conditions cumulatives), à savoir, d'une part, une position ou configuration intermédiaire ou de transport de l'outil 2 concerné et, d'autre part, une vitesse de mouvement dudit outil 2 inférieur à une valeur seuil prédéterminée.

La position intermédiaire peut, par exemple, correspondre à une position de passage d'obstacle ou de passage d'andain pour une machine agricole 1 du type machine de fenaison.

De manière complémentaire, il peut être prévu que le dispositif de verrouillage 6 soit réalisé de telle manière que la grandeur de commande de l'actionneur de réglage 7 concerné prenne une deuxième valeur de commande lorsque la grandeur d'entrée présente une valeur représentative d'une vitesse de travail de l'outil 2 concerné inférieure ou égale à la vitesse seuil, laquelle deuxième valeur de commande est utilisée pour autoriser une transposition de l'actionneur de réglage 7 entre sa première configuration et sa deuxième configuration.

Enfin, additionnellement, le circuit de commande 9 peut être conçu de sorte que, lorsque l'outil de travail 2 concerné est transposé ou déplacé vers sa position ou configuration de transport ou vers une position ou configuration intermédiaire située entre la position de travail et la position de transport, alors que la grandeur de commande prend la deuxième valeur, l'actionneur de réglage 7 est automatiquement transposé vers sa deuxième configuration.

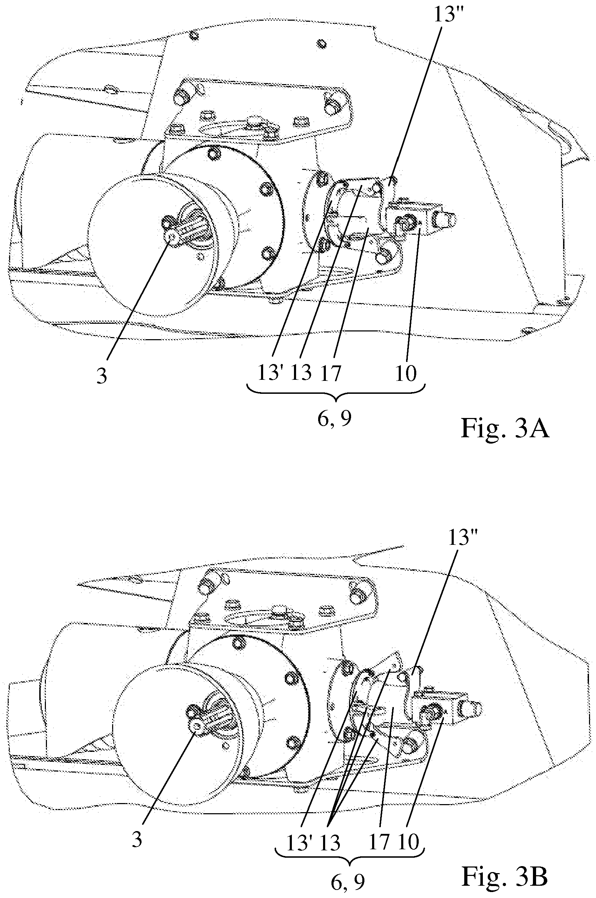

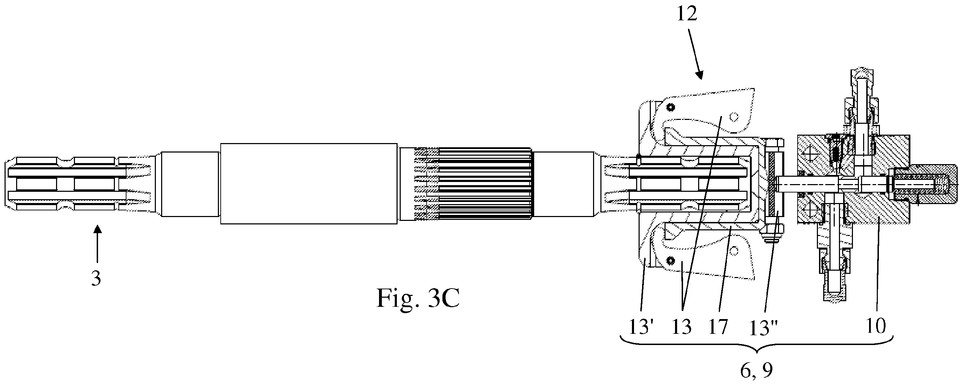

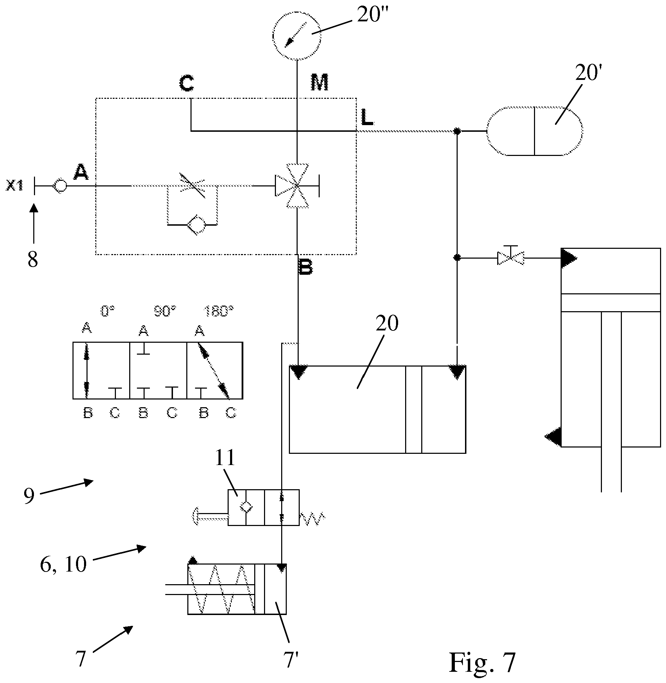

Conformément à un mode de réalisation préféré de l'invention, ressortant notamment des figures 3 et 7, le dispositif de verrouillage 6 peut comporter un moyen sélecteur 10 relié à la source d'énergie 8 extérieure pour piloter la manoeuvre ou le fonctionnement de l'actionneur de réglage 7 concerné sous l'effet de l'énergie extérieure, l'état de ce moyen sélecteur 10 constituant la grandeur de commande de l'actionneur de réglage 7, et le moyen sélecteur 10 pouvant présenter un premier état constituant la première valeur de la grandeur de commande et un deuxième état constituant la deuxième valeur de la grandeur de commande.

Selon une variante de réalisation pratique du circuit de commande 9, en relation notamment avec la mise en oeuvre d'un actionneur de réglage 7 de nature fluidique, ce dernier peut comporter une première partie 7' susceptible de recevoir un flux d'énergie extérieure depuis la source d'énergie extérieure 8, le moyen sélecteur 10 étant relié à la première partie 7', et la première partie 7' recevant ce flux d'énergie extérieure depuis la source d'énergie extérieure 8 lorsque l'actionneur de réglage 7 est transposé de sa première configuration vers sa deuxième configuration.

Comme le montre la figure 7, le moyen sélecteur 10 peut comprendre un moyen anti-retour 11 empêchant, lorsqu'il est actif ou sélectionné pour être mis en série dans le circuit d'alimentation, un flux d'énergie extérieure depuis la source d'énergie extérieure 8 vers la première partie 7' de l'actionneur de réglage 7, mais autorisant un flux d'énergie extérieure dans le sens de circulation opposé, le moyen anti-retour 11 étant actif lorsque le moyen sélecteur 10 est dans son premier état.

En outre, le moyen sélecteur 10 est aussi conçu de telle manière que, dans son deuxième état, il autorise un flux d'énergie bidirectionnel, à la fois de la source d'énergie extérieure 8 vers la première partie 7' et de la première partie 7' vers la source d'énergie extérieure 8.

Le circuit hydraulique représenté figure 7 peut aussi comprendre, de manière classique, une pompe de relevage 20, associée à un accumulateur 20' et à un manomètre 20".

Selon une caractéristique additionnelle de l'invention, compatible en particulier avec un actionneur de réglage 7 de type pneumatique ou hydraulique, mais également de type électrique, la source d'énergie extérieure 8 peut présenter un potentiel d'énergie nul lorsque l'outil de travail 2 concerné est déplacé vers / se trouve dans sa position ou configuration de travail et un potentiel d'énergie non nul lorsque l'outil de travail 2 concerné est déplacé vers / se trouve dans sa position ou configuration de transport ou dans une (la) position ou configuration intermédiaire située entre la position de travail et la position de transport.

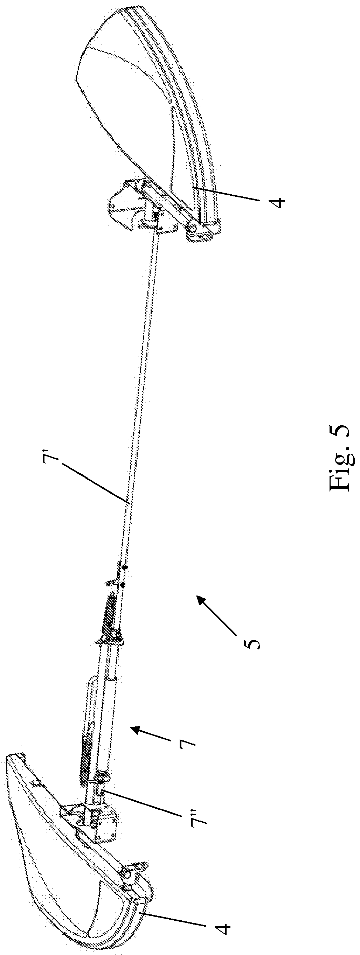

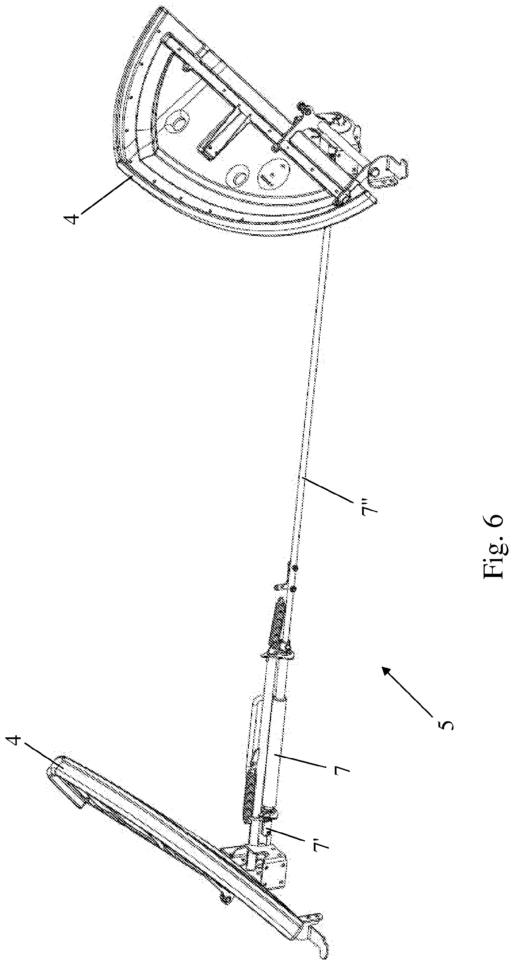

En accord avec un exemple de réalisation illustré notamment sur les figures 5 et 6, l'actionneur de réglage 7 concerné peut être un actionneur simple effet, par exemple du type vérin électrique, pneumatique ou hydraulique, qui rejoint automatiquement / se trouve automatiquement dans sa première configuration en l'absence de potentiel d'énergie fourni par la source d'énergie extérieure 8, par exemple sous l'effet d'une force de sollicitation en retour de nature potentielle, par exemple élastique.

Bien entendu, la machine 1 peut ne comporter qu'un seul moyen protecteur mobile 4, formant par exemple une partie d'un dispositif de protection global de l'ensemble des outils de travail 2, comme par exemple une partie mobile d'un dispositif de protection tel que prévu dans le document FR 2 726 152 précité.

En relation avec un autre mode de réalisation, illustré à titre d'exemple sur les figures 5 et 6 des dessins annexés, la machine agricole 1 comprend avantageusement au moins deux moyens protecteurs mobiles 4 distincts, par exemple sous forme de capots, couvercles ou d'éléments d'habillage souples ou rigides, pouvant être déplacés ensemble ou séparément par un actionneur de réglage 7 commun ou par des actionneurs de réglage respectifs distincts.

Sur les figures annexées, les deux moyens protecteurs 4, situés au niveau de deux côtés opposés de la machine 1, sont déplacés simultanément au moyen d'un unique actionneur de réglage 7, sous forme de vérin, dont chaque extrémité est reliée par un élément de tringlerie 7" (barre, tige) à l'un desdits moyens protecteurs 4.

Préférentiellement, ledit au moins un ou chaque actionneur de réglage 7 est un actionneur de réglage spécifiquement dédié au déplacement du, d'un ou des moyen(s) protecteur(s) 4.

Conformément à un premier mode de réalisation pratique, de nature mécanique, le dispositif de verrouillage 6 comporte un moyen transformateur 12 comportant au moins un élément d'entrée 13 moteur, l'élément ou chaque élément d'entrée 13 étant relié directement ou indirectement, et au moins cinématiquement, au moyen d'entraînement 3 ou à au moins un outil de travail 2, la grandeur d'entrée du dispositif de verrouillage 6 étant constituée par une vitesse d'entraînement de l'élément ou des éléments d'entrée 13, et le moyen transformateur 12 convertissant cette grandeur d'entrée en une grandeur de sortie utilisée pour piloter la manoeuvre de l'actionneur de réglage 7 concerné sous l'effet de l'énergie extérieure.

En accord avec un second mode de réalisation pratique, préférentiellement de nature électrique, le dispositif de verrouillage 6 comprend un dispositif 14 de pilotage de la manoeuvre de l'actionneur de réglage 7 sous l'effet de l'énergie extérieure, le dispositif de pilotage 14 étant essentiellement constitué par un moyen capteur 15 mesurant la vitesse de travail **d'au moins un outil de travail 2**, et par un moyen convertisseur 16 transformant la vitesse de travail mesurée par le moyen capteur 15 en une grandeur de sortie.

Dans les deux modes de réalisation précités, la valeur de la grandeur de sortie détermine l'état du moyen sélecteur 10, cette grandeur de sortie étant préférentiellement un déplacement linéaire ou angulaire d'un élément de sortie 17 que comporte le moyen transformateur 12 ou convertisseur 16.

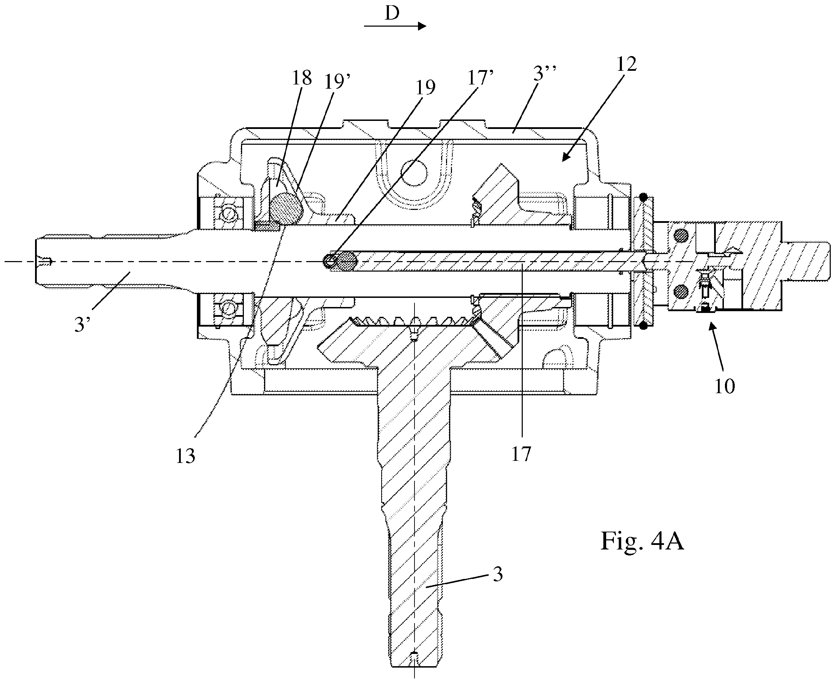

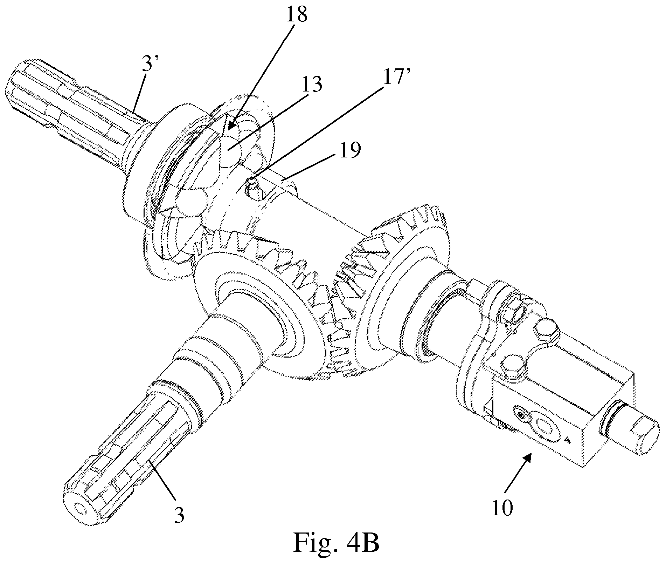

Deux variantes de réalisation pratiques, simples et fiables du premier mode précité sont représentées à titre d'exemples sur les figures 3 et 4 des dessins annexés.

Comme le montrent ces dernières, le moyen transformateur 12 est, dans ces deux variantes du même mode de réalisation, un moyen mécanique exploitant directement ou indirectement la force centrifuge résultant de la rotation **d'au moins un outil de travail 2** ou d'un organe 3' de transmission du mouvement relié cinématiquement à ce dernier par exemple un arrangement de masselottes ou de billes rotatives 13 formant une structure du type régulateur de Watt, la source d'énergie extérieure 8 étant préférentiellement une source d'énergie hydraulique et le pilotage de la manoeuvre de l'actionneur de réglage concerné 7 est réalisé par l'intermédiaire d'un distributeur hydraulique à tiroir formant moyen sélecteur 10.

En accord avec la première variante illustrée sur la figure 3C, les masselottes 13 peuvent être montées à pivotement sur une couronne 13' solidaire d'un élément en rotation entraîné directement ou indirectement par le moyen d'entraînement 3. Lors de la rotation de la couronne 13', les masselottes 13 sous forme de crochets lestés pivotent autour de leur point d'articulation avec la couronne 13' et, de ce fait, forcent l'élément de sortie 17 sous forme de poussoir à se déplacer en translation.

En accord avec la seconde variante illustrée sur les figures 4A et 4B, les billes 13 sont montées solidaires en rotation et autour d'un arbre de transmission intermédiaire 3' relié cinématiquement à l'arbre d'entrée 3. Ces billes 13 sont arrangées individuellement dans des logements 18 à extension radiale, fermés par un manchon 19, avec une aile annulaire 19' en forme de jupe tronconique et monté coulissant sur ledit arbre intermédiaire 3'.

Ce manchon coulissant 19 est solidaire d'un élément de sortie 17 sous forme de coulisseau monté dans un passage axial ménagé dans l'arbre intermédiaire 3' (liaison cinématique par l'intermédiaire d'un doigt d'entraînement 17').

Comme cela ressort des figures 4A et 4B, une rotation de l'arbre 3' entraîne un déplacement forcé des billes 13 vers l'extérieur sous l'action de la force centripète et provoque une translation, selon la direction D de la figure 4A, du manchon 19 et donc du coulisseau 17 (par exemple : ce dernier comporte un doigt reçu dans un orifice du manchon 19).

Dans les deux variantes précitées, ce déplacement en translation de l'élément de sortie 17, sous forme de poussoir ou de coulisseau, est transmis au moyen sélecteur 10 sous forme de vanne à tiroir qui, de ce fait, change d'état et positionne le moyen anti-retour 11 en série dans le circuit d'alimentation de l'actionneur de réglage 7 concerné.

Afin de répartir la force de pression exercée par l'élément de sortie 17 sur le moyen sélecteur 10, et comme illustré sur la figure 3C, un élément répartiteur intermédiaire (par exemple une plaque pivotante) 13" peut être prévu.

L'avantage de la variante des figures 4A et 4B est que l'ensemble des éléments constitutifs du moyen transformateur 12 est regroupé dans le carter 3" recevant les pignons d'engrènement entre l'arbre d'entrée 3 et l'arbre intermédiaire 3'.

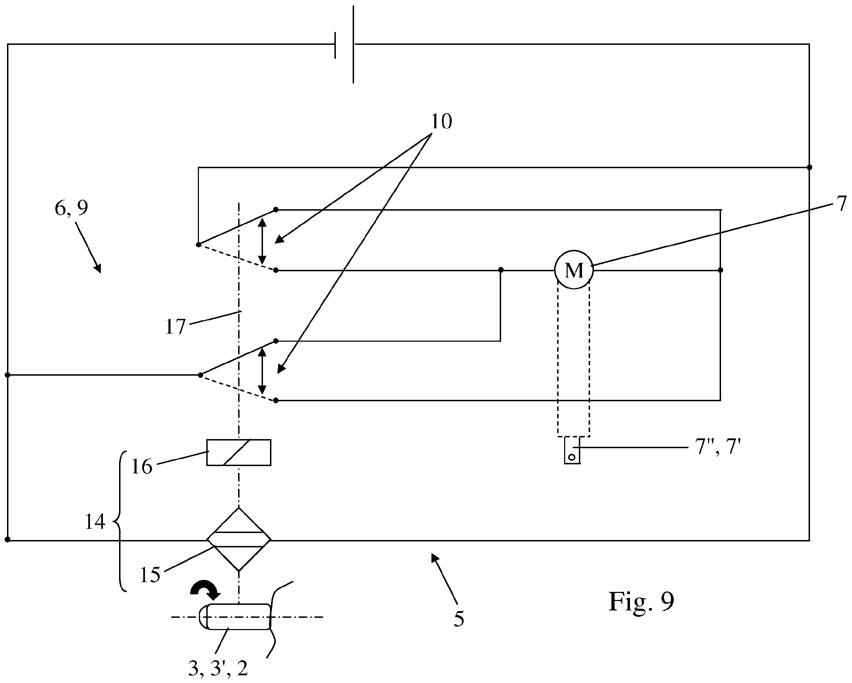

La figure 9 illustre, en relation avec le second mode de mise en oeuvre pratique précité, un exemple de variante de réalisation électrique du dispositif de déplacement 5 dans lequel un moyen capteur 15 mesure la vitesse d'entraînement ou de travail de la prise de force 3, d'un arbre de transmission 3' ou d'un outil 2, la valeur mesurée étant transmise à un moyen 16 d'analyse et de commande, lequel fournit une grandeur de sortie (mécanique ou électrique) à un élément 17 apte à déplacer un organe sélecteur 10 entre deux positions.

L'organe 10 consiste, dans l'exemple représenté figure 9, en une paire de commutateurs à commande commune, déterminant l'alimentation (et donc l'entraînement) d'un actionneur électrique 7 sous forme de moteur ou de vérin réversible, relié cinématiquement à au moins un élément de tringlerie 7" solidaire d'au moins un protecteur 4.

Pour aboutir à une sécurité optimale dans le cadre de la mise en oeuvre de la machine agricole 1, la valeur de la vitesse seuil est préférentiellement zéro (absence totale d'entraînement et/ou d'animation de l'outil).

Bien que les figures annexées présentent la machine agricole 1 sous la forme d'une faucheuse, notamment une faucheuse frontale. Elle peut également consister en un autre type de machine, tel que par exemple plus généralement une machine de fenaison.

Bien entendu, l'invention n'est pas limitée au mode de réalisation décrit et représenté aux dessins annexés. Des modifications restent possibles dans la limite définie par les revendications.

## Revendications

1. Machine (1) agricole **agencée pour** être reliée à et entraînée par un tracteur et comprenant :
- au moins un outil de travail (2) pouvant être entraîné à partir d'un moyen d'entraînement (3) pouvant présenter une vitesse d'entraînement variable, résultant en une vitesse de travail variable pour l'outil (2) concerné, cet outil de travail (2) pouvant être déplacé ou transposé au moins entre une position ou configuration de travail et une position ou configuration de transport,
- au moins un moyen protecteur (4) mobile pouvant être déplacé au moins entre une position opérationnelle, dans laquelle il entoure et/ou recouvre au moins partiellement l'outil de travail (2), et une position non-opérationnelle, dans laquelle l'outil de travail (2) concerné est au moins partiellement accessible,
- un dispositif (5) de déplacement dudit au moins un moyen protecteur (4) permettant de déplacer ce dernier au moins entre les positions opérationnelle et non-opérationnelle précitées, ce dispositif de déplacement (5) comportant au moins un actionneur de réglage (7) alimenté par une énergie délivrée depuis une source d'énergie extérieure (8),
- un dispositif (6) de verrouillage du moyen protecteur (4), dans au moins une des positions de ce dernier,
machine (1) dans laquelle :
le dispositif de déplacement (5) comprend un circuit (9) de commande de l'actionneur ou de chaque actionneur de réglage (7) permettant au moins une transposition de l'actionneur de réglage (7) concerné dans ou vers une première configuration, dans laquelle le moyen protecteur (4) concerné se trouve dans sa position opérationnelle, ainsi qu'une transposition de l'actionneur de réglage (7) concerné dans ou vers une deuxième configuration, dans laquelle le moyen protecteur (4) concerné peut se trouver dans sa position non-opérationnelle, et
le circuit de commande (9) intègre le dispositif de verrouillage (6) du moyen protecteur (4) concerné et est tel qu'il autorise ou contraint l'actionneur de réglage (7) concerné à se trouver dans sa première configuration lorsque l'outil (2) de travail considéré se trouve dans sa position ou configuration de travail,
machine (1) **caractérisée en ce qu'**elle **est agencée pour que**
le dispositif de verrouillage (6) transforme automatiquement une grandeur d'entrée variable en une grandeur de commande de l'actionneur de réglage (7) concerné, cette grandeur de commande pouvant prendre une première valeur de commande utilisée pour empêcher une transposition dudit actionneur de réglage (7) en dehors de sa première configuration,
la grandeur d'entrée présente une valeur qui est fonction ou dépendante la vitesse de travail dudit au moins un outil (2) concerné, et
la grandeur de commande prend et conserve la première valeur de commande tant que la grandeur d'entrée présente une valeur représentative de la vitesse de travail dudit au moins un outil (2) concerné, supérieure à une vitesse seuil.

2. Machine agricole selon la revendication 1, **caractérisée en ce que** le circuit de commande (9) de l'actionneur de réglage (7) concerné est tel que, lorsque l'outil de travail (2) concerné est déplacé de sa position ou configuration de transport vers sa position ou configuration de travail, ledit actionneur de réglage (7) est automatiquement transposé vers sa première configuration.

3. Machine agricole selon la revendication 1 ou 2, **caractérisée en ce que** le circuit de commande (9) de l'actionneur de réglage (7) concerné est tel qu'à partir d'une configuration initiale de la machine (1), dans laquelle l'outil de travail (2) concerné est dans sa position de travail et dans laquelle la grandeur de commande prend la première valeur de commande, l'actionneur de réglage (7) demeure dans sa première configuration lors d'un déplacement ultérieur de l'outil de travail (2) vers sa position ou configuration de transport ou vers une position ou configuration intermédiaire située entre la position ou configuration de travail et la position ou configuration de transport tant que la grandeur de commande conserve ou continue de prendre la première valeur de commande.

4. Machine agricole selon l'une quelconque des revendications 1 à 3, **caractérisée en ce que** le dispositif de verrouillage (6) est tel que la grandeur de commande de l'actionneur de réglage (7) concerné prend une deuxième valeur de commande lorsque la grandeur d'entrée présente une valeur représentative d'une vitesse de travail de l'outil (2) concerné inférieure ou égale à la vitesse seuil, laquelle deuxième valeur de commande est utilisée pour autoriser une transposition de l'actionneur de réglage (7) entre sa première configuration et sa deuxième configuration.

5. Machine agricole selon la revendication 4, **caractérisée en ce que** le circuit (9) de commande de l'actionneur de réglage (7) concerné est tel que, lorsque l'outil de travail (2) concerné est transposé ou déplacé vers sa position ou configuration de transport ou vers une position ou configuration intermédiaire située entre la position de travail et la position de transport, alors que la grandeur de commande prend la deuxième valeur, l'actionneur de réglage (7) est automatiquement transposé vers sa deuxième configuration.

6. Machine agricole selon l'une quelconque des revendications 1 à 5, **caractérisée en ce que**
le dispositif de verrouillage (6) comporte un moyen sélecteur (10) relié à la source d'énergie (8) extérieure pour piloter la manoeuvre ou le fonctionnement de l'actionneur de réglage (7) concerné sous l'effet de l'énergie extérieure,
l'état de ce moyen sélecteur (10) constitue la grandeur de commande de l'actionneur de réglage (7),
le moyen sélecteur (10) peut présenter un premier état constituant la première valeur de la grandeur de commande et un deuxième état constituant la deuxième valeur de la grandeur de commande.

7. Machine agricole selon la revendication 6, **caractérisée en ce que**
l'actionneur de réglage (7) comporte une première partie (7') susceptible de recevoir un flux d'énergie extérieure depuis la source d'énergie extérieure (8),
le moyen sélecteur (10) est relié à la première partie (7'),
la première partie (7') reçoit ce flux d'énergie extérieure depuis la source d'énergie extérieure (8) lorsque l'actionneur de réglage (7) est transposé de sa première configuration vers sa deuxième configuration.

8. Machine agricole selon la revendication 6 ou 7, **caractérisée en ce que**
le moyen sélecteur (10) comporte un moyen anti-retour (11) empêchant, lorsqu'il est actif, un flux d'énergie extérieure depuis la source d'énergie extérieure (8) vers la première partie (7') de l'actionneur de réglage (7), mais autorisant un flux d'énergie extérieure dans le sens de circulation opposé,
le moyen anti-retour (11) est actif lorsque le moyen sélecteur (10) est dans son premier état.

9. Machine agricole selon la revendication 7 ou 8, **caractérisée en ce que** le moyen sélecteur (10) est tel que, dans son deuxième état, il autorise un flux d'énergie bidirectionnel, à la fois de la source d'énergie extérieure (8) vers la première partie (7') et de la première partie (7') vers la source d'énergie extérieure (8).

10. Machine agricole selon l'une quelconque des revendications 1 à 9, **caractérisée en ce que** la source d'énergie extérieure (8) présente un potentiel d'énergie nul lorsque l'outil de travail (2) concerné est déplacé vers / se trouve dans sa position ou configuration de travail et un potentiel d'énergie non nul lorsque l'outil de travail (2) concerné est déplacé vers / se trouve dans sa position ou configuration de transport ou dans une (la) position ou configuration intermédiaire située entre la position de travail et la position de transport.

11. Machine agricole selon l'une quelconque des revendications 1 à 10, **caractérisée en ce que** l'actionneur de réglage (7) concerné est un actionneur simple effet, par exemple du type vérin électrique, pneumatique ou hydraulique, qui rejoint automatiquement / se trouve automatiquement dans sa première configuration en l'absence de potentiel d'énergie fourni par la source d'énergie extérieure (8), par exemple sous l'effet d'une force de sollicitation en retour de nature potentielle, par exemple élastique.

12. Machine agricole selon l'une quelconque des revendications 1 à 11, **caractérisée en ce qu'**elle comprend au moins deux moyens protecteurs mobiles (4) distincts, par exemple sous forme de capots, couvercles ou d'éléments d'habillage souples ou rigides, pouvant être déplacés ensemble ou séparément par un actionneur de réglage (7) commun ou par des actionneurs de réglage respectifs distincts.

13. Machine agricole selon l'une quelconque des revendications 11 et 12, **caractérisée en ce que** ledit au moins un ou chaque actionneur de réglage (7) est un actionneur de réglage spécifiquement dédié au déplacement du, d'un ou des moyen(s) protecteur(s) (4).

14. Machine agricole selon l'une quelconque des revendications 1 à 13, **caractérisée en ce que**
le dispositif de verrouillage (6) comporte un moyen transformateur (12) comportant au moins un élément d'entrée (13) moteur,
l'élément ou chaque élément d'entrée (13) est relié directement ou indirectement, et au moins cinématiquement, au moyen d'entraînement (3) ou à au moins un outil de travail (2),
la grandeur d'entrée du dispositif de verrouillage (6) est constituée par une vitesse d'entraînement de l'élément ou des éléments d'entrée (13),
le moyen transformateur (12) convertit cette grandeur d'entrée en une grandeur de sortie utilisée pour piloter la manoeuvre de l'actionneur de réglage (7) concerné sous l'effet de l'énergie extérieure.

15. Machine agricole selon l'une quelconque des revendications 1 à 13, **caractérisée en ce que** le dispositif de verrouillage (6) comprend un dispositif (14) de pilotage de la manoeuvre de l'actionneur de réglage (7) sous l'effet de l'énergie extérieure,
le dispositif de pilotage (14) est essentiellement constitué par un moyen capteur (15) mesurant la vitesse de travail d**'au moins un outil de travail (2)**, et par un moyen convertisseur (16) transformant la vitesse de travail mesurée par le moyen capteur (15) en une grandeur de sortie.

16. Machine agricole selon la revendication 14 ou 15 et l'une quelconque des revendications 6 à 9, **caractérisée en ce que** la valeur de la grandeur de sortie détermine l'état du moyen sélecteur (10).

17. Machine agricole selon l'une quelconque des revendications 14 à 16, **caractérisée en ce que** la grandeur de sortie est un déplacement linéaire ou angulaire d'un élément de sortie (17) que comporte le moyen transformateur (12) ou convertisseur (16).

18. Machine agricole selon la revendication 14, **caractérisée en ce que** le moyen transformateur (12) est un moyen mécanique exploitant directement ou indirectement la force centrifuge résultant **de la rotation d'au moins un outil de travail (2)** ou d'un organe (3') de transmission du mouvement relié cinématiquement à ce dernier, par exemple un arrangement de masselottes ou de billes rotatives (13) formant une structure du type régulateur de Watt, la source d'énergie extérieure (8) étant préférentiellement une source d'énergie hydraulique et le pilotage de la manoeuvre de l'actionneur de réglage concerné (7) est réalisé par l'intermédiaire d'un distributeur hydraulique à tiroir formant moyen sélecteur (10).

19. Machine agricole selon l'une quelconque des revendications 1 à 18, **caractérisée en ce que** la valeur de la vitesse seuil est zéro.

20. Machine agricole selon l'une quelconque des revendications 1 à 19, **caractérisée en ce qu'**elle consiste en une machine agricole tractée ou portée par un tracteur ou analogue, le moyen d'entraînement (3) étant un arbre d'entrée relié à la prise de force dudit tracteur.

21. Machine agricole selon l'une quelconque des revendications 1 à 20, **caractérisée en ce qu'**elle consiste en une machine de fenaison.

22. Machine agricole selon l'une quelconque des revendications 1 à 20, **caractérisée en ce qu'**elle consiste en une faucheuse, notamment une faucheuse frontale.

## Patentansprüche

1. Landwirtschaftliche Maschine (1), die dazu eingerichtet ist, mit einem Traktor verbunden zu werden und von diesem angetrieben zu werden und die Folgendes umfasst:
- mindestens ein Arbeitsgerät (2), das von einer Antriebseinrichtung (3) angetrieben werden kann, die eine variable Antriebsdrehzahl aufweisen kann, die in einer variablen Betriebsdrehzahl für das betreffende Gerät (2) resultiert, wobei das Arbeitsgerät (2) mindestens zwischen einer Arbeitsposition oder -konfiguration und einer Transportposition oder -konfiguration bewegt oder versetzt werden kann,
- mindestens eine mobile Schutzeinrichtung (4), die mindestens zwischen einer Betriebsposition, in der sie das Arbeitsgerät (2) zumindest teilweise umgibt und/oder abdeckt, und einer Ruheposition bewegt werden kann, in der das betreffende Arbeitsgerät (2) zumindest teilweise zugänglich ist,
- eine Bewegungsvorrichtung (5) der mindestens einen Schutzeinrichtung (4), die das Bewegen der letzteren zumindest zwischen der vorgenannten Betriebs- und Ruheposition ermöglicht, wobei die Bewegungsvorrichtung (5) mindestens einen Stellaktor (7) umfasst, der von einer Energie gespeist wird, die von einer externen Energiequelle (8) zugeführt wird,
- eine Vorrichtung (6) zur Verriegelung der Schutzeinrichtung (4) in mindestens einer von den letzten Positionen,
Maschine (1) in welcher:
die Bewegungsvorrichtung (5) eine Steuerschaltung (9) des Aktors oder jedes Stellaktors (7) umfasst, die mindestens eine Versetzung des betreffenden Stellaktors (7) in eine oder hin zu einer ersten Konfiguration ermöglicht, in der die betreffende Schutzeinrichtung (4) sich in ihrer Betriebsposition befindet, sowie eine Versetzung des betreffenden Stellaktors (7) in eine oder hin zu einer zweiten Konfiguration ermöglicht, in der die betreffende Schutzeinrichtung (4) sich in ihrer Ruheposition befinden kann, und
die Steuerschaltung (9) die Verriegelungsvorrichtung (6) der betreffenden Schutzeinrichtung (4) integriert und derart ist, dass sie den betreffenden Stellaktor (7) gestattet oder zwingt, sich in seiner ersten Konfiguration zu befinden, wenn sich das betreffende Arbeitsgerät (2) in seiner Arbeitsposition oder -konfiguration befindet,
wobei die Maschine (1) **dadurch gekennzeichnet ist, dass sie dazu eingerichtet ist, dass**
die Verriegelungsvorrichtung (6) eine variable Eingangsgröße automatisch in eine Steuergröße des betreffenden Stellaktors (7) umwandelt, wobei diese Steuergröße einen ersten Steuerwert annehmen kann, der verwendet wird, um eine Versetzung des Stellaktors (7) aus seiner ersten Konfiguration heraus zu verhindern,
die Eingangsgröße einen Wert aufweist, der eine Funktion bzw. abhängig von der Betriebsdrehzahl des mindestens einen betreffenden Geräts (2) ist, und
die Steuergröße den ersten Steuerwert einnimmt und beibehält, sofern die Eingangsgröße einen die Betriebsdrehzahl des mindestens einen betreffenden Geräts (2) repräsentierenden Wert aufweist, der größer ist als eine Grenzdrehzahl.

2. Landwirtschaftliche Maschine nach Anspruch 1, **dadurch gekennzeichnet, dass** die Steuerschaltung (9) des betreffenden Stellaktors (7) derart ist, dass, wenn das betreffende Arbeitsgerät (2) aus seiner Transportposition oder -konfiguration in seine Arbeitsposition oder -konfiguration bewegt wird, der Stellaktor (7) automatisch in seine erste Konfiguration versetzt wird.

3. Landwirtschaftliche Maschine nach Anspruch 1 oder 2, **dadurch gekennzeichnet, dass** die Steuerschaltung (9) des betreffenden Stellaktors (7) derart ist, dass aus einer Anfangskonfiguration der Maschine (1), in der das betreffende Arbeitsgerät (2) sich in seiner Arbeitsposition befindet und in der die Steuergröße den ersten Steuerwert annimmt, bei einer späteren Bewegung des Arbeitsgeräts (2) in seine Transportposition oder -konfiguration oder in eine Zwischenposition oder - konfiguration, die zwischen der Arbeitsposition oder -konfiguration und der Transportposition oder -konfiguration liegt, der Stellaktor (7) in seiner ersten Konfiguration verbleibt, sofern die Steuergröße den ersten Steuerwert beibehält bzw. weiterhin annimmt.

4. Landwirtschaftliche Maschine nach einem der Ansprüche 1 bis 3, **dadurch gekennzeichnet, dass** die Verriegelungseinrichtung (6) derart ist, dass die Steuergröße des betreffenden Stellaktors (7) einen zweiten Steuerwert annimmt, wenn die Eingangsgröße einen die Betriebsdrehzahl des betreffenden Geräts (2) repräsentierenden Wert kleiner oder gleich der Grenzdrehzahl aufweist, wobei der zweite Steuerwert dazu verwendet wird, eine Versetzung des Stellaktors (7) zwischen seiner ersten Konfiguration und seiner zweiten Konfiguration zu autorisieren.

5. Landwirtschaftliche Maschine nach Anspruch 4, **dadurch gekennzeichnet, dass** die Steuerschaltung (9) des betreffenden Stellaktors (7) derart ist, dass, wenn das betreffende Arbeitsgerät (2) in seine Transportposition oder -konfiguration oder in eine Zwischenposition oder -konfiguration, die zwischen der Arbeitsposition und der Transportposition liegt, versetzt oder bewegt wird, wenn die Steuergröße den zweiten Wert annimmt, der Stellaktor (7) automatisch in seine zweite Konfiguration versetzt wird.

6. Landwirtschaftliche Maschine nach einem der Ansprüche 1 bis 5, **dadurch gekennzeichnet, dass**
die Verriegelungsvorrichtung (6) eine Auswahleinrichtung (10) umfasst, die mit der externen Energiequelle (8) verbunden ist, um die Betätigung oder den Betrieb des betreffenden Stellaktors (7) unter der Wirkung der externen Energie anzusteuern,
der Zustand dieser Auswahleinrichtung (10) die Steuergröße des Stellaktors (7) darstellt,
die Auswahleinrichtung (10) einen ersten Zustand, der den ersten Wert der Steuergröße darstellt, und einen zweiten Zustand, der den zweiten Wert der Steuergröße darstellt, aufweisen kann.

7. Landwirtschaftliche Maschine nach Anspruch 6, **dadurch gekennzeichnet, dass** der Stellaktor (7) einen ersten Abschnitt (7') umfasst, der einen externen Energiefluss von der externen Energiequelle (8) empfangen kann,
die Auswahleinrichtung (10) mit dem ersten Abschnitt (7') verbunden ist,
der erste Abschnitt (7') diesen externen Energiefluss von der externen Energiequelle (8) empfängt, wenn der Stellaktor (7) von seiner ersten Konfiguration in seine zweite Konfiguration versetzt wird.

8. Landwirtschaftliche Maschine nach Anspruch 6 oder 7, **dadurch gekennzeichnet, dass**
die Auswahleinrichtung (10) eine Rücklaufsperrvorrichtung (11) umfasst, die, wenn sie aktiv ist, einen externen Energiefluss von der externen Energiequelle (8) zu dem ersten Abschnitt (7') des Stellaktors (7) verhindert, aber einen externen Energiefluss in der entgegengesetzten Flussrichtung gestattet,
die Rücklaufsperrvorrichtung (11) aktiv ist, wenn sich die Auswahleinrichtung (10) in ihrem ersten Zustand befindet.

9. Landwirtschaftliche Maschine nach Anspruch 7 oder 8, **dadurch gekennzeichnet, dass** die Auswahleinrichtung (10) derart ist, dass sie in ihrem zweiten Zustand einen bidirektionalen Energiefluss gleichzeitig von der externen Energiequelle (8) zu dem ersten Abschnitt (7') und von dem ersten Abschnitt (7') zu der externen Energiequelle (8) gestattet.

10. Landwirtschaftliche Maschine nach einem der Ansprüche 1 bis 9, **dadurch gekennzeichnet, dass** die externe Energiequelle (8) ein Energiepotenzial von Null aufweist, wenn das betreffende Arbeitsgerät (2) in seine Arbeitsposition oder -konfiguration bewegt wird / sich darin befindet, und ein Energiepotenzial ungleich Null aufweist, wenn das betreffende Arbeitsgerät (2) in seine Transportposition oder -konfiguration oder in eine (die) Zwischenposition oder -konfiguration, die zwischen der Arbeitsposition und der Transportposition liegt, bewegt wird / sich darin befindet.

11. Landwirtschaftliche Maschine nach einem der Ansprüche 1 bis 10, **dadurch gekennzeichnet, dass** der betreffende Stellaktor (7) ein einfachwirkender Stellaktor beispielsweise des Elektro-, Pneumatik- oder Hydraulikantriebtyps ist, der in der Abwesenheit von Energiepotenzial, das beispielsweise durch eine Vorspannkraft potenzieller Art, beispielsweise elastisch, von der externen Energiequelle (8) bereitgestellt wird, automatisch seine erste Konfiguration wieder einnimmt / sich automatisch darin befindet.

12. Landwirtschaftliche Maschine nach einem der Ansprüche 1 bis 11, **dadurch gekennzeichnet, dass** sie mindestens zwei gesonderte mobile Schutzeinrichtungen (4) umfasst, beispielsweise in Form von Abdeckkappen, Deckeln oder flexiblen oder starren Verkleidungselementen, die zusammen oder separat mittels eines gemeinsamen Stellaktors (7) oder mittels jeweiligen gesonderten Stellaktoren bewegt werden können.

13. Landwirtschaftliche Maschine nach einem der Ansprüche 11 und 12, **dadurch gekennzeichnet, dass** der mindestens eine oder jeder Stellaktor (7) ein Stellaktor ist, der speziell für die Bewegung der, einer oder der Schutzeinrichtung(en) (4) bestimmt ist.

14. Landwirtschaftliche Maschine nach einem der Ansprüche 1 bis 13, **dadurch gekennzeichnet, dass**
die Verriegelungsvorrichtung (6) eine Umwandlungseinrichtung (12) umfasst, die mindestens ein Motoreingangselement (13) umfasst,
das Element oder jedes Eingangselement (13) direkt oder indirekt und zumindest kinematisch mit der Antriebseinrichtung (3) oder mit mindestens einem Arbeitsgerät (2) verbunden ist,
die Eingangsgröße der Verriegelungsvorrichtung (6) aus einer Antriebsdrehzahl des Eingangselements oder der Eingangselemente (13) gebildet wird,
die Umwandlungseinrichtung (12) diese Eingangsgröße in eine Ausgangsgröße konvertiert, die verwendet wird, um die Betätigung des betreffenden Stellaktors (7) unter der Wirkung der externen Energie anzusteuern.

15. Landwirtschaftliche Maschine nach einem der Ansprüche 1 bis 13, **dadurch gekennzeichnet, dass** die Verriegelungsvorrichtung (6) eine Ansteuervorrichtung (14) der Betätigung des Stellaktors (7) unter der Wirkung der externen Energie umfasst,
die Ansteuervorrichtung (14) im Wesentlichen aus einer Sensoreinrichtung (15), die die Betriebsdrehzahl des mindestens einen Arbeitsgeräts (2) misst, und aus einer Wandlereinrichtung (16) gebildet wird, die die von der Sensoreinrichtung (15) gemessene Betriebsdrehzahl in eine Ausgangsgröße umwandelt.

16. Landwirtschaftliche Maschine nach Anspruch 14 oder 15 und einem der Ansprüche 6 bis 9, **dadurch gekennzeichnet, dass** der Wert der Ausgangsgröße den Zustand der Auswahleinrichtung (10) bestimmt.

17. Landwirtschaftliche Maschine nach einem der Ansprüche 14 bis 16, **dadurch gekennzeichnet, dass** die Ausgangsgröße eine Linearbewegung oder eine Winkelbewegung eines Ausgangselements (17) ist, das von der Umwandlungseinrichtung (12) oder Wandlereinrichtung (16) umfasst ist.

18. Landwirtschaftliche Maschine nach Anspruch 14, **dadurch gekennzeichnet, dass** die Umwandlungseinrichtung (12) eine mechanische Vorrichtung ist, die direkt oder indirekt die Fliehkraft nutzt, die sich aus der Drehung eines Arbeitsgeräts (2) und/oder eines Elements (3') zur Übertragung der Bewegung ergibt, das kinematisch mit diesem verbunden ist, beispielsweise einer Anordnung von Fliehgewichten oder umlaufenden Kugeln (13), die eine Struktur der Art eines Wattreglers bildet, wobei die externe Energiequelle (8) vorzugsweise eine hydraulische Energiequelle ist und die Ansteuerung der Betätigung des betreffenden Stellaktors (7) mittels eines Hydraulikverteilers mit Schieber realisiert wird, der die Auswahleinrichtung (10) ausbildet.

19. Landwirtschaftliche Maschine nach einem der Ansprüche 1 bis 18, **dadurch gekennzeichnet, dass** der Wert der Grenzdrehzahl Null ist.

20. Landwirtschaftliche Maschine nach einem der Ansprüche 1 bis 19, **dadurch gekennzeichnet, dass** sie aus einer von einem Traktor oder ähnlich gezogenen oder getragenen landwirtschaftlichen Maschine besteht, wobei die Antriebsvorrichtung (3) eine Eingangswelle ist, die mit der Zapfwelle des Traktors verbunden ist.

21. Landwirtschaftliche Maschine nach einem der Ansprüche 1 bis 20, **dadurch gekennzeichnet, dass** sie aus einer Heuwerbungsmaschine besteht.

22. Landwirtschaftliche Maschine nach einem der Ansprüche 1 bis 20, **dadurch gekennzeichnet, dass** sie aus einem Mähwerk, insbesondere einem Frontmähwerk besteht.

## Claims

1. Agricultural machine (1) arranged so as to be connected to and driven by a tractor and comprising:
- at least one working implement (2) capable of being driven from a drive means (3) capable of having a variable drive speed, resulting in a variable working speed for the implement (2) concerned, this working implement (2) being capable of being displaced or transposed at least between a working position or configuration and a transport position or configuration,
- at least one movable protective means (4) capable of being displaced at least between an operative position, in which it surrounds and/or covers at least partially the working implement (2), and an inoperative position, in which the working implement (2) concerned is at least partially accessible,
- a device (5) for the displacement of said at least one protective means (4) making it possible to displace the latter at least between the aforesaid operative and inoperative positions, this displacement device (5) comprising at least one adjustment actuator (7) supplied by energy delivered from an external energy source (8),
- a device (6) for locking the protective means (4), in at least one of the positions of the latter,
in which machine (1):
the displacement device (5) comprises a circuit (9) for control of the adjustment actuator or of each adjustment actuator (7) allowing at least transposition of the adjustment actuator (7) concerned in or towards a first configuration, in which the protective means (4) concerned is in its operative position, as well as transposition of the adjustment actuator (7) concerned in or towards a second configuration, in which the protective means (4) concerned may be in its inoperative position, and
the control circuit (9) incorporates the locking device (6) for the protective means (4) concerned and is such that it authorises or forces the adjustment actuator (7) concerned to be in its first configuration when the working implement (2) in question is in its working position or configuration,
machine (1) **characterised in that** it is arranged so that
the locking device (6) automatically converts a variable input quantity to a control quantity for the adjustment actuator (7) concerned, this control quantity being capable of assuming a first control value used to prevent transposition of said adjustment actuator (7) outside its first configuration,
the input quantity has a value which is a function of or dependent on the working speed of said at least one implement (2) concerned, and
the control quantity assumes and maintains the first control value as long as the input quantity has a value representative of the working speed of said at least one implement (2) concerned, which is greater than a threshold speed.

2. Agricultural machine according to claim 1, **characterised in that** the control circuit (9) for the adjustment actuator (7) concerned is such that, when the working implement (2) concerned is displaced from its transport position or configuration towards its working position or configuration, said adjustment actuator (7) is automatically transposed towards its first configuration.

3. Agricultural machine according to claim 1 or 2, **characterised in that** the control circuit (9) for the adjustment actuator (7) concerned is such that, from an initial configuration of the machine (1) in which the working implement (2) concerned is in its working position and in which the control quantity assumes the first control value, the adjustment actuator (7) remains in its first configuration during subsequent displacement of the working implement (2) towards its transport position or configuration or towards an intermediate position or configuration situated between the working position or configuration and the transport position or configuration as long as the control quantity maintains or continues to assume the first control value.

4. Agricultural machine according to any one of claims 1 to 3, **characterised in that** the locking device (6) is such that the control quantity for the adjustment actuator (7) concerned assumes a second control value when the input quantity has a value representative of a working speed of the implement (2) concerned which is lower than or equal to the threshold speed, which second control value is used to authorise transposition of the adjustment actuator (7) between its first configuration and its second configuration.

5. Agricultural machine according to claim 4, **characterised in that** the control circuit (9) for the adjustment actuator (7) concerned is such that, when the working implement (2) concerned is transposed or displaced towards its transport position or configuration or towards an intermediate position or configuration situated between the working position and the transport position, while the control quantity assumes the second value, the adjustment actuator (7) is automatically transposed towards its second configuration.

6. Agricultural machine according to any one of claims 1 to 5, **characterised in that**
the locking device (6) comprises a selector means (10) connected to the external energy source (8) in order to direct the manoeuvring or functioning of the adjustment actuator (7) concerned under the effect of the external energy,
the state of this selector means (10) constitutes the control quantity for the adjustment actuator (7),
the selector means (10) may have a first state constituting the first value of the control quantity and a second state constituting the second value of the control quantity.

7. Agricultural machine according to claim 6, **characterised in that**
the adjustment actuator (7) comprises a first portion (7') capable of receiving an external energy flow from the external energy source (8),
the selector means (10) is connected to the first portion (7'),
the first portion (7') receives this external energy flow from the external energy source (8) when the adjustment actuator (7) is transposed from its first configuration towards its second configuration.

8. Agricultural machine according to claim 6 or 7, **characterised in that**
the selector means (10) comprises a non-return means (11) preventing, when it is active, an external energy flow from the external energy source (8) towards the first portion (7') of the adjustment actuator (7), but authorising an external energy flow in the opposite direction of circulation,
the non-return means (11) is active when the selector means (10) is in its first state.

9. Agricultural machine according to claim 7 or 8, **characterised in that** the selector means (10) is such that, in its second state, it authorises a bidirectional energy flow, both from the external energy source (8) to the first portion (7') and from the first portion (7') to the external energy source (8).

10. Agricultural machine according to any one of claims 1 to 9, **characterised in that** the external energy source (8) has a zero energy potential when the working implement (2) concerned is displaced towards / is in its working position or configuration, and a non-zero energy potential when the working implement (2) concerned is displaced towards / is in its transport position or configuration or in an (the) intermediate position or configuration situated between the working position and the transport position.

11. Agricultural machine according to any one of claims 1 to 10, **characterised in that** the adjustment actuator (7) concerned is a single-acting actuator, for example of the electric, pneumatic or hydraulic actuator type, which recovers automatically / is automatically in its first configuration in the absence of energy potential supplied by the external energy source (8), for example under the effect of a return biasing force of the potential type, for example elastic.

12. Agricultural machine according to any one of claims 1 to 11, **characterised in that** it comprises at least two separate movable protective means (4), for example in the form of hoods, covers or flexible or rigid panelling elements, capable of being displaced together or separately by a common adjustment actuator (7) or by respective separate adjustment actuators.

13. Agricultural machine according to any one of claims 11 and 12, **characterised in that** said at least one or each adjustment actuator (7) is an adjustment actuator specifically dedicated to the displacement of the or one or more protective means (4).

14. Agricultural machine according to any one of claims 1 to 13, **characterised in that**
the locking device (6) comprises a transformer means (12) comprising at least one motor input element (13),
the or each input element (13) is connected directly or indirectly, and at least kinematically, to the drive means (3) or to at least one working implement (2),
the input quantity of the locking device (6) consists of a drive speed of the input element or elements (13),
the transformer means (12) converts this input quantity to an output quantity used to direct the manoeuvring of the adjustment actuator (7) concerned under the effect of the external energy.

15. Agricultural machine according to any one of claims 1 to 13, **characterised in that** the locking device (6) comprises a device (14) for directing the manoeuvring of the adjustment actuator (7) under the effect of the external energy,
the directing device (14) essentially consists of a sensor means (15) measuring the working speed of at least one working implement (2), and of a converter means (16) converting the working speed measured by the sensor means (15) to an output quantity.

16. Agricultural machine according to claim 14 or 15 and any one of claims 6 to 9, **characterised in that** the value of the output quantity determines the state of the selector means (10).

17. Agricultural machine according to any one of claims 14 to 16, **characterised in that** the output quantity is a linear or angular displacement of an output element (17) included in the transformer (12) or converter (16) means.

18. Agricultural machine according to claim 14, **characterised in that** the transformer means (12) is a mechanical means directly or indirectly exploiting the centrifugal force resulting from the rotation of at least one working implement (2) or a member (3') for transmitting the movement kinematically connected to the latter, for example an arrangement of flyweights or rotary ball bearings (13) forming a structure of the Watt governor type, the external energy source (8) being preferably a hydraulic energy source, and directing of the manoeuvring of the adjustment actuator (7) concerned is carried out by means of a hydraulic distributor with spool valve forming a selector means (10).

19. Agricultural machine according to any one of claims 1 to 18, **characterised in that** the value of the threshold speed is zero.

20. Agricultural machine according to any one of claims 1 to 19, **characterised in that** it consists of an agricultural machine towed or carried by a tractor or the like, the drive means (3) being an input shaft connected to the power take-off of said tractor.

21. Agricultural machine according to any one of claims 1 to 20, **characterised in that** it consists of a haymaking machine.

22. Agricultural machine according to any one of claims 1 to 20, **characterised in that** it consists of a mower, in particular a front-mounted mower.
